# EUROPÄISCHE PATENTSCHRIFT

(11) **EP 0 499 677 B1**
(45) Veröffentlichungstag und Bekanntmachung des Hinweises auf die Patenterteilung: **10.08.1994**
(21) Anmeldenummer: 91102586.4
(22) Anmeldetag: 22.02.1991
(51) Int. Cl.: C01B 5/00, G21C 19/317

(54) **Vorrichtung zur Rekombination von Wasserstoff und Sauerstoff**
Device for the recombination of hydrogen and oxygen
Dispositif de recombinaison d'hydrogène et d'oxygène

(43) Veröffentlichungstag der Anmeldung: 26.08.1992
(73) Patentinhaber: Gesellschaft für Reaktorsicherheit (GRS) mbH, 50667 Köln (DE)
(72) Erfinder: Chakraborty, Amiya Kumar, Dr., W-5042 Erftstadt (DE)
(74) Vertreter: Hoffmann, Eckart, Dipl.-Ing.

(56) Entgegenhaltungen:
- EP-A- 0 303 144

## Beschreibung

Die Erfindung betrifft eine Vorrichtung zur Rekombination von Wasserstoff und Sauerstoff gemäß dem Oberbegriff des Patentanspruchs 1.

Eine Vorrichtung dieser Art, die später noch näher beschrieben wird, ist aus der EP-A-0 303 144 bekannt.

Wie in der DE-A-36 04 416 ausführlich dargelegt, tritt das Problem, Wasserstoff aus einem Gasgemisch zu beseitigen, insbesondere bei Kernreaktorunfällen auf, bei denen Wasserstoff in die sauerstoffhaltige Atmosphäre des Sicherheitsbehälters oder eines Druckabbausystems des Kernreaktors austritt und damit eine Explosionsgefahr heraufbeschwört. Zur Vermeidung dieser Explosionsgefahr ist es bekannt, den Wasserstoff durch eine katalytisch unterstützte Rekombination mit Sauerstoff zu Wasserdampf zu beseitigen. Für diesen Zweck und somit auch im Rahmen der vorliegenden Erfindung besonders geeignete Katalysatormaterialen werden in der DE-A-37 25 290 beschrieben. Da ein solcher Katalysator Teil einer Sicherheitseinrichtung ist, die ihre Wirkung erst in einem Störungsfall entfalten soll, muß dafür Sorge getragen werden, daß der Katalysator seine Funktionsfähigkeit unter Umständen über sehr viele Jahre beibehält. Zu diesem Zweck ist es bekannt, den Katalysator innerhalb des Raumes, innerhalb dessen im Störungsfall der Wasserstoff beseitigt werden soll, in einem luftdicht abgeschlossenen Gehäuse unterzubringen, das sich bei Eintritt des Störungsfalles durch Druck- und/oder Temperatureinfluß selbsttätig öffnet und damit den Katalysator der wasserstoff- und sauerstoffhaltigen Atmosphäre aussetzt.

Während des Kernschmelzens in einem Reaktordruckbehälter (RDB) wird eine Temperaturerhöhung in der Schmelze bis 2400°C erreicht, wobei große Mengen an Spaltprodukten und Strukturmaterialien in die Atmosphäre des Sicherheitsbehälters freigesetzt werden. Es kommt dort zu einem Gemisch von Wasserdampf und Gasen, in dem Aerosolpartikel mit einer Massenkonzentration von bis zu 20 g/m³ suspendiert sein können. So können sich zum Beispiel im Niederdruck-Pfad zu Beginn der Schmelz-Beton-Wechselwirkung 1 bis 3 t dispergierter Masse luftgetragen im Sicherheitsbehälter befinden. Der bei weitem größte Massenanteil, mehr als 95%, ist nicht radioaktiv. Doch ist der größte Anteil der radioaktiven Substanzen an Aerosolpartikel gebunden. Die eingangs erwähnte Freisetzung von Wasserstoff bei Reaktorunfällen fällt zeitlich mit der vorgenannten Freisetzung von Aerosolen zusammen.

Modelluntersuchungen haben gezeigt, daß die Freisetzung des Dampfes praktisch mit dem Beginn eines Kernschmelzunfalls einsetzt, während diejenige des Wasserstoffs und gleichzeitig damit die Freisetzung von Aerosolen erst mit einer gewissen Verzögerung auftreten. Bei Vorhandensein großer Dampfmengen und starker Strömung verläuft die katalytische Reaktion langsamer. Die Reaktionsgeschwindigkeit nimmt exponentiell mit der Temperatur zu. Erst bei einer ausreichend hohen Temperatur an der Oberfläche der Katalysatoranordnung ergibt sich eine Konvektionsströmung, die ausreicht zu verhindern, daß sich die im Gasgemisch enthaltenen Aerosolteilchen an der Katalysatoroberfläche absetzen. Dies wird durch die bei entsprechend hoher Temperatur und Umwandlungsrate ständige Ausbildung von Reaktionsdampf an der Oberfläche der Katalysatoranordnung unterstützt. Solange jedoch in der Anfangsphase die Temperatur der Katalysatoranordnung noch nicht ausreichend hoch ist, können sich Aerosolteilchen und im Dampf enthaltene Fettteilchen an der Oberfläche absetzen und damit die effektive Katalysatoroberfläche verringern sowie die Katalysatorwirkung wesentlich beeinträchtigen.

Die eingangs schon erwähnte EP-A-0 303 144 enthält eine Katalysatoranordnung innerhalb eines zylindrischen Rohres, dessen beide Stirnseiten durch sich im Störungsfall selbsttätig öffnende Verschlüsse abgedichtet sind. Das Rohr wird senkrecht in dem zu schützenden Raum angeordnet und weist zwischen seiner unteren Stirnseite und der Katalysatoranordnung eine Filteranordnung zur chemischen Neutralisierung von Katalysatorgiften auf. Die Filteranordnung kann ein poröser Keramikkörper oder eine gepreßte Faserstruktur sein, die mit Silbernitrat versehen ist. Wenn sich die Verschlüsse an den beiden Stirnseiten des Rohres öffnen, dringt die wasserstoffhaltige Atmosphäre in das Rohr ein und gelangt über das Filter an die Katalysatoranordnung, die sich aufgrund der exothermen Reaktion erwärmt und damit eine Gasströmung durch das Rohr in Gang setzt.

Als Beispiele für sich temperaturabhängig selbsttätig öffnende Verschlüsse sind in der genannten Druckschrift Membranen aus einem bei erhöhten Temperaturen schmelzenden Kunststoff sowie Bimetallbleche angegeben. Die Bimetallbleche ergeben keinen gasdichten Verschluß. Kunststoffmembranen gewährleisten andererseits nicht auf Dauer einen zuverlässigen gasdichten Verschluß. Sie können außerdem im Fall gezielter Zündungen brennen und durch die Freisetzung von Gasen die Umgebung belasten.

Der im Störungsfall gemäß obigen Ausführungen zunächst freigesetzte Wasserdampf durchströmt die Räume der Anlagen, in denen sich Umwälzpumpen, Gleitlager, Elektromotoren, etc. befinden, und reißt dabei gewisse Mengen an Schmier- und Abdichtungsfett mit sich. An die Katalysatoranordnung gelangende Fetteilchen können sich an der Katalysatoroberfläche absetzen, solange deren Temperatur unterhalb der Verdampfungstemperatur des Fetts liegt. Es hat sich gezeigt, daß derartige Fettablagerungen die Katalysatorwirkung erheblich beeinträchtigen. Bereits ein geringer Fettanteil von nur 0,05 g Fett/Liter Dampf vermag die katalytische Reaktion zu verhindern. Zur Vermeidung der von dem Fett herrührenden Probleme beschreibt die nicht vorveröffentlichte deutsche Patentanmeldung P 40 03 833.5 eine Schutzvorrichtung für die Katalysatoranordnung. Diese Schutzvorrichtung enthält im wesentlichen Filter, die gasdurchlässig sind, jedoch einen hohen Abscheidegrad für Aerosole und Fetteilchen aufweisen. Bei den Filtern handelt es sich um sogenannte HEPA (High Efficiency Particulate Air) Filter. Das sind Filter aus Glaswolle und einem Bindemittel, die sehr temperaturbeständig (bis ca. 900°C) sind. Die Filter umgeben die Katalysatoranordnung in einer Weise, daß Aerosole und Fettteilchen von der Katalysatoroberfläche ferngehalten werden, während Wasserstoff und Sauerstoff an diese Oberfläche gelangen. Aufgrund des Einschlusses durch die Filter und einer entsprechend geringen Wärmeableitung steigt die Temperatur der Katalysatoroberfläche infolge der exothermen Rekombinationsreaktion rasch an. Sobald die Temperatur einen Wert erreicht hat, bei dem sich Fetteilchen nicht mehr auf der Katalysatoroberfläche absetzen können, klappen die Filter ab und setzen damit die Katalysatoranordnung dem ungehinderten Zutritt der Atmosphäre des zu schützenden Raumes aus, so daß die Katalysatoranordnung nun ihre volle Wirkung entfalten kann. Die in jener Patentanmeldung beschriebenen Filter schützen zwar die Katalysatoranordnung in der Anfangsphase eines Störungsfalles vor der Ablagerung von Aerosolen und Fetteilchen, sie vermögen aber eine langfristige Verschlechterung der Katalysatorwirkung durch in der Umgebungsatmosphäre enthaltene Katalysatorgifte vor dem Eintritt eines Störungsfalles nicht zu verhindern.

Die Betriebszeit eines Reaktors beträgt bis zu 40 Jahren. Während dieser langen Zeitdauer müssen die Vorrichtungen zur Rekombination von Wasserstoff und Sauerstoff im Bereitschaftszustand ihre volle Funktionsfähigkeit erhalten. Man weiß, daß Palladium und Platin als Katalysatormaterial gegen Oberflächenkontamination empfindlich sind und an Wirksamkeit einbüßen. Die in der DE-A-37 25 290 beschriebenen Legierungen sind weniger empfindlich, jedoch liegen keine Ergebnisse von Langzeitversuchen über die Auswirkungen von Verunreinigungen wie Chlor, Schwefel, usw. vor.

Aufgabe der Erfindung ist es, eine Vorrichtung der eingangs angegebenen Art so auszugestalten, daß sie einerseits weder durch einen langandauernden Bereitschaftszustand noch bei Eintritt eines Störungsfalles durch Ablagerung von Aerosolen und Fetteilchen an der Katalysatoroberfläche an Wirksamkeit verliert.

Diese Aufgabe wird erfindungsgemäß durch eine Vorrichtung gemäß dem Patentanspruch 1 gelöst.

Vorteilhafte Weiterbildungen der Erfindung sind in den Unteransprüchen enthalten.

Die Lösung der angegebenen Aufgabe sieht vor, daß die Katalysatoranordnung während des Bereitschaftszustands in einem gasdicht verschlossenen Gehäuse untergebracht ist, wodurch eine Oberflächenkontamination der Katalysatoroberfläche ausgeschlossen wird. Vorzugsweise ist das Gehäuse mit einem unter Überdruck (in der Größenordnung von 10⁵ Pa) stehenden inerten Gas wie Argon, Stickstoff, Wasserstoff oder Helium gefüllt.

Aufgrund der erfindungsgemäßen Ausgestaltung der Vorrichtung lassen sich drei Betriebszustände unterscheiden, nämlich der Bereitschaftszustand bis zum Eintritt eines Störungsfalles, ein vorläufiger Betriebszustand nach Eintritt eines Störungsfalles sowie ein endgültiger Betriebszustand nach Erreichen einer Temperatur an der Katalysatoroberfläche, die eine wirkungsvolle Rekombination garantiert und bei der eine Beeinträchtigung der Katalysatorwirkung durch Aerosol- oder Fettablagerungen nicht mehr befürchtet zu werden braucht.

Der Eintritt des Störungsfalles ist mit einer Temperaturerhöhung verbunden, auf die erste temperaturabhängig öffnende Verschlüsse ansprechen und bis dahin gasdicht verschlossene Öffnungen im Gehäuse freigeben, so daß die umgebende Atmosphäre in das Gehäuse eindringen kann. Die Vorrichtung ist damit aus ihrem Bereitschaftszustand in den vorläufigen Betriebszustand übergegangen. Die Ansprechtemperatur dieser ersten Verschlüsse liegt beim bevorzugten Anwendungsfall der Vorrichtung im Bereich von 100°C. Die Lage der Katalysatoranordnung und der Filteranordnung im Gehäuse sowie die Lage und die Größe der Öffnungen sind so gewählt, daß ausreichend Wasserstoff und Sauerstoff zur Rekombination an die Katalysatoranordnung gelangen, sich aber keine zu starke Strömung einstellt und Fett- und Aerosolteilchen von der Filteranordnung zurückgehalten werden, so daß sie sich nicht an der Katalysatoroberfläche absetzen können. Die in diesem Betriebszustand relativ geringe Strömung führt zu einem schnellen Temperaturanstieg der Katalysatoranordnung, so daß nach relativ kurzer Zeit eine Temperatur oberhalb von etwa 160°C erreicht wird, bei der eine sogenannte selbsttragende, beschleunigte Katalysationsreaktion vorliegt. Bei diesem Temperaturanstieg wird die Ansprechtemperatur eines zweiten temperaturabhängig öffnenden Verschlusses erreicht, der daraufhin eine weitere Öffnung im Gehäuse freigibt und so die Vorrichtung in ihren endgültigen Betriebszustand bringt. In diesem endgültigen Betriebszustand ist die Katalysatoranordnung ohne Zwischenschaltung der Filteranordnung voll dem umgebenden Gasgemisch ausgesetzt, dem der Wasserstoff entzogen werden soll.

Die temperaturabhängig öffnenden Verschlüsse sind vorzugsweise mit dem Gehäuse verlötet, so daß sich eine zuverlässige, dauerhaft gasdichte Verbindung ergibt. Über die Schmelztemperatur des jeweils verwendeten Lots läßt sich die Ansprechtemperatur der Verschlüsse festlegen.

Ein Ausführungsbeispiel der Erfindung wird nachfolgend anhand der schematischen Zeichnungen näher erläutert. Es zeigen:
- Fig. 1: in perspektivischer Darstellung eine Ausführungsform des Gehäuses,
- Fig. 2: eine Detaildarstellung einer bevorzugten Ausführungsform der temperaturabhängig öffnenden Verschlüsse, und
- Fig. 3: eine Schnittansicht durch eine der Filterkammern längs der Linie III-III in Fig. 1.

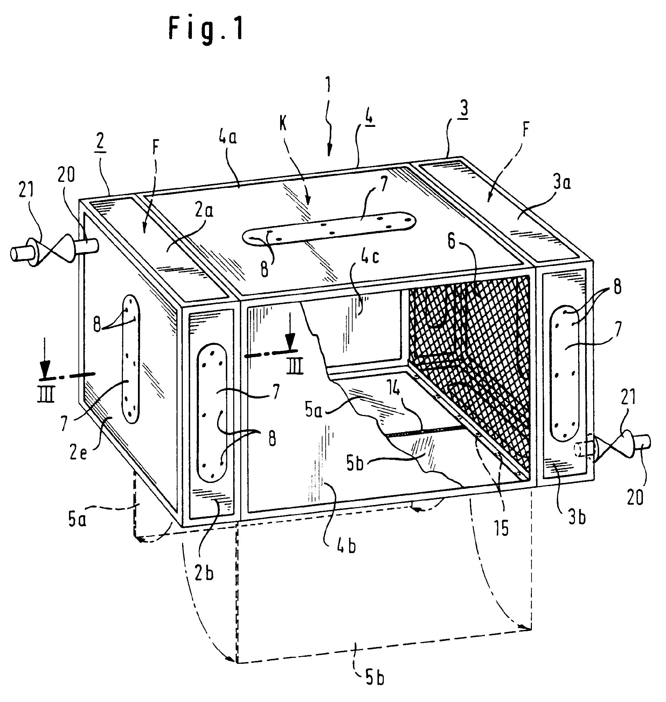

In der Darstellung von Fig. 1 sind der besseren Übersichtlichkeit halber die Katalysatoranordnung und die Filteranordnung weggelassen. Ein Gehäuse 1 setzt sich aus drei Abschnitten 2, 3 und 4 zusammen, wobei sich die kleineren Abschnitte 2 und 3 zu beiden Seiten des größeren mittleren Abschnitts 4 befinden. Jeder dieser Gehäuseabschnitte enthält einen Rahmen aus zusammengeschweißten Winkelprofilen, und die Rahmen der drei Gehäuseabschnitte sind ihrerseits zu einem Gesamtrahmen zusammengeschweißt. Mit Ausnahme des Bodens des mittleren Gehäuseabschnitts 4 sind in die Rahmen Bleche eingeschweißt, von denen in Fig. 1 die Bleche 2a, 2b, 2e, 4a, 4b, 4c, 3a und 3b bezeichnet sind. Im Boden des mittleren Gehäuseabschnitts 4 ist eine Tür mit zwei Flügeln 5a und 5b angeordnet, die an gegenüberliegenden Längsseiten des Rahmens des mittleren Gehäuseabschnittes schwenkbar angelenkt sind. Die Wände zwischen den beiden äußeren Gehäuseabschnitten 2 und 3 einerseits und dem mittleren Gehäuseabschnitt 4 andererseits sind von grobmaschigen Netzen 6 gebildet, von denen in Fig. 1 aufgrund der weggebrochenen Darstellung des Bleches 4b nur dasjenige zwischen den Gehäuseabschnitten 3 und 4 erkennbar ist. Diese Netze 6 unterteilen den Gesamtinnenraum des Gehäuses 1 in zwei äußere Filterkammern F entsprechend den beiden Gehäuseabschnitten 2 und 3 und eine mittlere Katalysatorkammer K entsprechend dem mittleren Gehäuseabschnitt 4. Die Netze gewährleisten eine freie Konvektion zwischen den Filterkammern F und der Katalysatorkammer K. Jede der Filterkammern F enthält eine in Fig. 1 nicht dargestellte Filteranordnung, während die Katalysatorkammer K eine ebenfalls in Fig. 1 nicht dargestellte Katalysatoranordnung enthält. Die das Gehäuse 1 bildenden Winkelprofile und Bleche bestehen vorzugsweise aus rostfreiem Stahl.

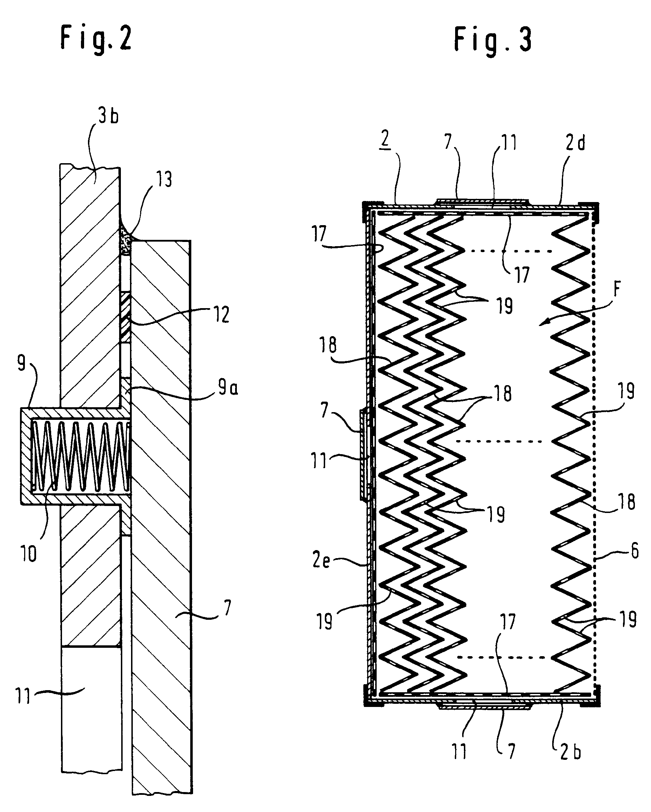

Die beiden äußeren Gehäuseabschnitte 2 und 3 sind mit Ausnahme ihrer in der Darstellung von Fig. 1 nach oben gerichteten Wand in jeder Wand mit einer Öffnung (11 in Fig. 2) versehen. Jede dieser Öffnungen ist an der Außenseite der entsprechenden Wand mit einer Deckplatte 7 abgedeckt. Der mittlere Gehäuseabschnitt 4 weist eine ähnliche, ebenfalls außen durch eine Deckplatte 7 abgedeckte Öffnung in seiner in Fig. 1 oben liegenden Wand auf. Die Deckplatten 7 bilden in später noch näher beschriebener Weise erste temperaturabhängig öffnende Verschlüsse. Die Flügel 5a und 5b bilden einen zweiten temperaturabhängig öffnenden Verschluß und sind in Fig. 1 gestrichelt in ihrer aufgeklappten Stellung dargestellt. Auch die Abdeckplatten 7 und die Flügel 5a, 5b bestehen vorzugsweise aus rostfreiem Stahl.

Zur Erläuterung einer bevorzugten Ausführungsform der temperaturabhängig öffnenden ersten Verschlüsse wird auf die vergrößerte Schnittdarstellung in Fig. 2 Bezug genommen. In Fig. 2 steht 3b stellvertretend für eine der einen entsprechenden Verschluß aufweisenden Wände des Gehäuses 1. An den in Fig. 1 durch Punkte 8 angedeuteten Stellen ist in eine Bohrung in der Gehäusewand ein Federtopf 9 eingesetzt, der sich mit einem Flansch 9a an der Außenseite der Gehäusewand abstützt und eine vorgespannte Schraubenfeder 10 enthält. Die Deckplatte 7 überdeckt die entsprechende Öffnung 11 in der Gehäusewand sowie den angrenzenden Rand der Gehäusewand und liegt auf den Flanschen 9a der Federtöpfe 9 und erforderlichenfalls auf einem Abstandshalter 12 auf. Längs ihrem gesamten Umfangsrand ist die Deckplatte 7 mit der Gehäusewand verlötet, wie durch 13 in Fig. 2 angedeutet. Die Schmelztemperatur des dafür verwendeten Lots bestimmt die Ansprechtemperatur dieser ersten Verschlüsse. Sobald diese Ansprechtemperatur erreicht ist und das Lot zu schmelzen beginnt, drücken die vorgespannten Federn 10 die Abdeckplatte 7 von der Gehäusewand ab, so daß die Öffnung 11 freigegeben wird. Die im Bereich der äußeren Gehäuseabschnitte 2 und 3 vorgesehenen Abdeckplatten 7 fallen dann aufgrund der Schwerkraft vom Gehäuse ab. Die Abdeckplatte 7 des an der Oberseite des mittleren Gehäuseabschnitts 4 vorgesehenen Verschlusses wird von den vorgespannten Federn 10 soweit von der Gehäusewand nach oben abgehoben, daß eine ungehinderte Strömung durch die entsprechende Öffnung gewährleistet ist.

Die Flügel 5a und 5b, die im Bereitschaftszustand und im vorläufigen Betriebszustand der Vorrichtung den Boden des die Katalysatorkammer K enthaltenden mittleren Gehäuseabschnitts 4 bilden, sind, wie schon ausgeführt, an gegenüberliegenden Längsseiten des Rahmens angelenkt. Die Schmalseiten der Flügel 5a und 5b sind an dem Gehäuserahmen in gleicher Weise gasdicht befestigt, wie es für die Abdeckplatten 7 in Fig. 2 dargestellt ist. An den in Fig. 1 mit 15 bezeichneten Stellen ist ein Federtopf der in Fig. 2 gezeigten Art mit einer vorgespannten Schraubenfeder in dem Winkelprofil des Gehäuserahmens angeordnet, so daß durch die Schraubenfeder ein Druck auf die Schmalseiten der Flügel 5a und 5b ausgeübt wird. Die Flügel 5a und 5b sind längs ihrer Schmalseiten mit dem Winkelprofil des Gehäuserahmens verlötet. Das hierfür eingesetzte Lot, das in den Figuren nicht dargestellt ist, hat eine höhere Schmelztemperatur als das für die Verlötung der Abdeckplatten 7 verwendete Lot. Beim bevorzugten Anwendungsfall der Vorrichtung liegt die Schmelztemperatur des höherschmelzenden Lots bei etwa 160°C. Längs des Spalts 14 zwischen den beiden Flügeln 5a und 5b in ihrer geschlossenen Stellung sowie längs der Längsseiten der Flügel, an denen diese am Gehäuserahmen angelenkt sind, sind die Flügel zur Erzielung eines dauerhaft gasdichten Verschlusses ebenfalls verlötet. Vorzugsweise ist das an diesen Stellen eingesetzte Lot eines das bei niedriger Temperatur schmilzt, als das für die Verlötung der Schmalseiten der Flügel verwendete Lot. Hierdurch wird sichergestellt, daß die Scharniere, mittels derer die Flügel 5a und 5b am Gehäuserahmen angelenkt sind, im wesentlichen frei von störendem Lot sind, wenn bei Erreichen der höheren Temperatur das Lot an den Schmalseiten der Flügel 5a und 5b schmilzt.

Wenn nach dem Eintritt eines Störungsfalles die Temperatur in der Umgebung des Gehäuses 1 so weit ansteigt, daß das Lot, mittels dessen die Abdeckplatten 7 an dem Gehäuse verlötet sind, schmilzt und die Abdeckplatten abfallen bzw. vom Gehäuse abgehoben werden, dann stellt sich eine Konvektionsströmung durch das Gehäuse ein. Das das Gehäuse umgebende Gasgemisch kann durch die im Bereich der Filterkammer F vorgesehenen Öffnungen als Einlaßöffnungen in das Gehäuse eintreten und gelangt nach Filterung durch die Filteranordnungen innerhalb der Filterkammern zur Katalysatoranordnung in der Katalysatorkammer K. Die in der Oberseite des mittleren Gehäuseabschnitts 4 vorgesehene Öffnung bildet eine Auslaßöffnung für diese Gasströmung. Die Einlaßöffnungen und die Auslaßöffnungen sind nach Lage und Größe so bemessen, daß sich in der anfänglichen Phase des Störungsfalles eine Strömung einstellt, die ausreichend Wasserstoff und Sauerstoff an die Katalysatoranordnung innerhalb der Katalysatorkammer K führt, jedoch nur eine relativ geringe Abkühlung der Katalysatoroberfläche zur Folge hat. Dadurch, daß in dieser anfänglichen Phase das das Gehäuse 1 umgebende Gasgemisch nur über die Filteranordnungen Zutritt zu der Katalysatorkammer hat, wird gewährleistet, daß sich keine Fett- und Aerosolteilchen an der Katalysatoroberfläche absetzen können. Zugleich bewirkt die relativ geringe Wärmeabfuhr eine rasche Aufheizung der Katalysatoranordnung. Ist die Temperatur ausreichend hoch geworden, so daß Aerosolteilchen und Fetteilchen sich auf der Katalysatoroberfläche nicht mehr absetzen können, dann öffnet sich der zweite Verschluß in Form der Flügel 5a und 5b, so daß die Katalysatoranordnung nunmehr direkt, das heißt ohne Zwischenschaltung der Filteranordnungen, dem umgebenden Gasgemisch ausgesetzt wird. Die Katalysatoranordnung kann so ausgebildet sein, daß sie in diesem Moment aus der Katalysatorkammer K herausfällt und eine Lage innerhalb des Raumes unter dem Gehäuse 1 annimmt.

Wie in Fig. 1 dargestellt, ist das Gehäuse an der in Fig. 1 rechts dargestellten Stirnwand im Bereich der Unterseite und an der links dargestellten Stirnwand im Bereich der Oberseite je mit einem Rohrstutzen 20, der ein Ventil 21 enthält, versehen. Nach dem Einbringen der Filteranordnungen und der Katalysatoranordnung und anschließendem Verlöten des Gehäuses muß die im Gehäuse befindliche Luft mit einem inerten Gas ausgetauscht werden. Diesem Zweck dienen die Rohrstutzen 20 mit den luftdicht verschließbaren Ventilen 21. Zunächst wird bei geöffneten Ventilen in den rechts dargestellten Rohrstutzen inertes Gas eingeleitet, bis es die Luft im Gehäuse verdrängt hat. Dann wird das Ventil 21 im links dargestellten Rohrstutzen 20 geschlossen und durch den anderen Rohrstutzen weiter inertes Gas eingeleitet, bis ein erwünschter Überdruck im Gehäuse erreicht wird. Dann wird auch das zweite Ventil geschlossen, und die Vorrichtung befindet sich in ihrem Bereitschaftszustand.

Die als Wände an dem Gehäuserahmen befestigten Bleche, insbesondere die Bleche des mittleren Gehäuseabschnitts 1 (4a, 4b, 4c) sowie die Flügel 5a und 5b können an der Innenseite mit Katalysatormaterial beschichtet sein und damit selbst zur Rekombination von Wasserstoff und Sauerstoff beitragen. Dies führt zu einer Erhöhung der Katalysatoroberfläche und außerdem zu einem rascheren Anstieg der Temperatur innerhalb der Katalysatorkammer K während des vorläufigen Betriebszustandes.

Fig. 3 zeigt einen Schnitt durch den Gehäuseabschnitt 2 mit einer der Filterkammern F und in ihr angeordneter Filteranordnung. Vorzugsweise umfaßt die Filteranordnung vor jeder der zunächst mit einer Abdeckplatte 7 verschlossenen Öffnungen 11 eine grobe und damit stark gasdurchlässige Filterfolie oder Filterscheibe 17, während der Rest der Filterkammer mit wellenförmigen, ineinander geschachtelten feinen Filterfolien 18 aufgefüllt ist. Die groben Filterscheiben 17 weisen für Fett- und Aerosolteilchen einen Abscheidegrad in der Größenordnung von 80%, die feinen Filterfolien in der Größenordnung von 90-99% auf. Die feinen Filterfolien 18 können mit Löchern 19 versehen sein, die so angeordnet sind, daß die Löcher benachbarter Filterfolien gegeneinander versetzt sind. Sowohl bei den groben als auch bei den feinen Filterfolien handelt es sich um HEPA-Filter. Es sei darauf hingewiesen, daß die Filterkammer F im Gehäuseabschnitt 3 eine gleichartige Filteranordnung enthält.

Die in den Figuren nicht dargestellte Katalysatoranordnung kann grundsätzlich unterschiedlichster Art sein. Sie kann eine oder mehrere Katalysatorplatten umfassen, von denen jede aus einem mit Katalysatormaterial beschichteten Trägerblech, vorzugsweise aus rostfreiem Stahl, besteht. Auch in Netze, vorzugsweise aus rostfreiem Stahl, eingeschlossene Granulate oder Schwämme aus Katalysatormaterial in plattenförmiger oder anderer Gestalt könnten verwendet werden, um nur ein weiteres mögliches Beispiel anzugeben. Bezüglich der speziellen Ausgestaltung der Katalysatoranordnung ist allein wichtig, daß sie während des anfänglichen vorläufigen Betriebszustandes ausreichend Katalysatoroberfläche zur Verfügung stellt, daß ein rascher Anstieg auf die Betriebstemperatur erreicht wird.

Insbesonders plattenförmige Katalysatorkörper können mittels Ketten oder dergleichen in der Katalysatorkammer K aufgehängt sein und nach Öffnen der Flügel 5a und 5b aus der Katalysatorkammer herausfallen, um dann in verschiedenen, durch die jeweilige Kettenlänge festgelegten Höhen unterhalb des Gehäuses 1 frei im Raum zu hängen. Auf diese Weise lassen sich, wie in der nicht vorveröffentlichten europäischen Patentanmeldung EP-A- 416143 beschrieben, zusätzlich zu der eigentlichen Rekombination weitere Wirkungen, wie etwa das Auflösen von Sperrschichten erzielen. Auch die in der nicht vorveröffentlichten europäischen Patentanmeldung EP-A- 416140 beschriebene Katalysatoranordnung läßt sich in Verbindung mit der vorliegenden Anmeldung einsetzen.

Unabhängig von den in den Filterkammern F untergebrachten Filteranordnungen können die Katalysatorflächen der Katalysatoranordnung ihrerseits mit einer Filterschicht bedeckt sein, die auch im endgültigen Betriebszustand am Katalysatorkörper verbleibt und einen gewissen Schutz der Katalysatorflächen ausübt, ohne deren Katalysationswirkung zu beeinträchtigen.

## Patentansprüche

1. Vorrichtung zur Rekombination von Wasserstoff und Sauerstoff mit Hilfe einer Katalysatoranordnung, bei der die Katalysatoranordnung in einem Gehäuse (1) angeordnet ist, das wenigstens eine Einlaßöffnung (11) und wenigstens eine Auslaßöffnung (11) aufweist, die mittels erster temperaturabhängig öffnender Verschlüsse (7) gasdicht verschlossen sind, solange die Temperatur die Ansprechtemperatur dieser Verschlüsse nicht übersteigt, und bei der in dem Gehäuse ferner eine gasdurchlässige Filteranordnung (17, 18) derart angeordnet ist, daß nach dem Öffnen der ersten Verschlüsse in die Einlaßöffnung eintretende Gase oder Gasgemische die Katalysatoranordnung erst nach Durchlaufen der Filteranordnung erreichen,
dadurch **gekennzeichnet,** daß die Filteranordnung für Aerosole und Fett im wesentlichen undurchlässig ist und daß das Gehäuse (1) wenigstens eine weitere Öffnung aufweist, die mittels eines temperaturabhängig öffnenden zweiten Verschlusses (5a, 5b) gasdicht verschlossen ist, solange die Temperatur die Ansprechtemperatur dieses zweiten Verschlusses nicht übersteigt, wobei die Ansprechtemperatur dieses zweiten Verschlusses höher ist als die der ersten Verschlüsse, und wobei die zweite Öffnung so in dem Gehäuse angeordnet ist, daß die Katalysatoranordnung nach Öffnen des zweiten Verschlusses ohne Zwischenschaltung der Filteranordnung direkt der das Gehäuse umgebenden Atmosphäre ausgesetzt wird.

2. Vorrichtung nach Anspruch 1, dadurch **gekennzeichnet,** daß das Gehäuse in wenigstens eine Filterkammer (F) und eine Katalysatorkammer (K) unterteilt ist, daß es im Bereich der Filterkammer wenigstens eine Einlaßöffnung (11) und im Bereich der Katalysatorkammer je wenigstens eine Auslaßöffnung (11) und eine weitere Öffnung aufweist, und daß die Lage und die Fläche der wenigstens einen Einlaßöffnung und der wenigstens einen Auslaßöffnung so gewählt sind, daß sich nach Öffnung der ersten Verschlüsse (7) aufgrund natürlicher Konvektion eine Strömung durch die wenigstens eine Einlaßöffnung, die die Filteranordnung enthaltende Filterkammer (F), die Katalysatorkammer (K) und die wenigstens eine Auslaßöffnung einstellt.

3. Vorrichtung nach Anspruch 2, dadurch **gekennzeichnet,** daß das im wesentlichen quaderförmig ausgebildete Gehäuse (1) an seinen beiden Stirnseiten je eine Filterkammer (F) und zwischen diesen die Katalysatorkammer (K) aufweist.

4. Vorrichtung nach einem der Ansprüche 2 oder 3, dadurch **gekennzeichnet,** daß das Gehäuse mittels grobmaschiger Netze (6) in die verschiedenen Kammern (F, K) unterteilt ist.

5. Vorrichtung nach einem der Ansprüche 3 oder 4, dadurch **gekennzeichnet,** daß das Gehäuse (1) im Bereich der Filterkammer(n) (F) in einer ersten, einer zweiten und einer dritten der vier Seitenwände sowie in der (jeweiligen) Stirnwand je wenigstens eine Einlaßöffnung aufweist und im Bereich der Katalysatorkammer (K) in der vierten Seitenwand wenigstens eine Auslaßöffnung und in der ihr gegenüberliegenden Seitenwand die weitere Öffnung aufweist.

6. Vorrichtung nach einem der Ansprüche 2 bis 5, dadurch **gekennzeichnet,** daß in der Filterkammer (F) die Einlaßöffnungen mit einem relativ groben Filter (17) abgedeckt sind und der Rest der Filterkammer mit relativ feinen, wellenförmigen Filterfolien (18) ausgefüllt ist.

7. Vorrichtung nach Anspruch 6, dadurch **gekennkennzeichnet,** daß die relativ groben Filter (17) einen Abscheidegrad von etwa 80% für Aerosole und Fetteilchen aufweisen, während die relativ feinen Filterfolien (18) einen Abscheidegrad von 90 bis 99% aufweisen.

8. Vorrichtung nach einem der Ansprüche 6 oder 7, dadurch **gekennzeichnet,** daß die feinen Filterfolien (18) mit Löchern (19) versehen sind, wobei die Löcher zweier benachbarter Filterfolien gegeneinander versetzt angeordnet sind.

9. Vorrichtung nach einem der vorhergehenden Ansprüche, dadurch **gekennzeichnet,** daß die ersten Verschlüsse jeweils eine über die zugehörige Öffnung (11) von außen gelegte Deckplatte (7) umfassen, die rundum mittels eines bei der gewünschten Ansprechtemperatur schmelzenden Lots (13) mit dem Gehäuse (1) verlötet sind, wobei zwischen der Deckplatte (7) und der Gehäusewand (3b) gespannte Federn (10) eingesetzt sind, die bei einem Schmelzen des Lots die Deckplatte von dem Gehäuse wegdrücken.

10. Vorrichtung nach einem der vorhergehenden Ansprüche, dadurch **gekennzeichnet,** daß eine weitere Öffnung im Boden der Katalysatorkammer (K) ausgebildet ist.

11. Vorrichtung nach Anspruch 10, dadurch **gekennzeichnet,** daß der zweite Verschluß eine von außen auf die weitere Öffnung gelegte und umlaufend mit einem Lot verlötete Platte umfaßt, dessen Schmelztemperatur die Ansprechtemperatur des zweiten Verschlusses bestimmt, wobei zwischen der Platte und dem Gehäuse gespannte Federn eingesetzt sind, die bei Schmelzen des Lots die Platte von dem Gehäuse wegdrücken.

12. Vorrichtung nach Anspruch 10, dadurch **gekennzeichnet,** daß der zweite Verschluß wenigstens eine schwenkbar am Gehäuse angelenkte Platte (5a, 5b) aufweist, die wenigstens teilweise mittels eines die Ansprechtemperatur des zweiten Verschlusses bestimmenden Lots mit dem Gehäuse (1) verlötet ist und durch zwischengesetzte gespannte Federn bei Schmelzen des Lots aufklappbar ist.

13. Vorrichtung nach Anspruch 12, dadurch **gekennzeichnet,** daß die im geschlossenen Zustand innenliegende Seite der Platte (5a, 5b) mit Katalysatormaterial beschichtet ist.

14. Vorrichtung nach einem der vorhergehenden Ansprüche, dadurch **gekennzeichnet,** daß das Gehäuse einen Rahmen aus Profilschienen aufweist, an dem die Gehäusewände bildende Bleche (2a, 2b, 2e, 4a, 4b, 4c, 3a, 3b) gasdicht befestigt, vorzugsweise verlötet oder verschweißt sind.

15. Vorrichtung nach Anspruch 14, dadurch **gekennzeichnet,** daß wenigstens einige der die Gehäusewände bildenden Bleche an ihrer Innenseite mit Katalysatormaterial beschichtet sind.

16. Vorrichtung nach einem der Ansprüche 10 bis 15, dadurch **gekennzeichnet,** daß die Katalysatoranordnung eine oder mehrere Katalysatorkörper umfaßt, die mittels flexibler Haltemittel derart an dem Gehäuse befestigt sind, daß sie nach Öffnen des zweiten Verschlusses um einen durch die Länge der Haltemittel vorgegebenen Abstand aus der Katalysationskammer herausfallen.

17. Vorrichtung nach einem der vorhergehenden Ansprüche, dadurch **gekennzeichnet,** daß das Gehäuse (1) mit Mitteln (20, 21) zur Erzeugung und Aufrechterhaltung einer inerten Gasatmosphäre innerhalb des Gehäuse unter einem Druck, der größer ist, als der der das Gehäuse umgehenden Atmosphäre, versehen ist.

## Claims

1. Apparatus for the recombination of hydrogen and oxygen by means of a catalyst arrangement in which the catalyst arrangement is disposed in a housing (1) having at least one inlet opening (11) and at least one outlet opening (11) which are gas-tightly closed by means of first closures (7) which open in dependence on temperature, as long as the temperature does not exceed the response temperature of said closures, and in which a gas-permeable filter arrangement (17, 18) is also arranged in the housing in such a way that gases or gas mixtures which pass into the inlet opening after opening of the first closures reach the catalyst arrangement only after passing through the filter arrangement,
characterised in that the filter arrangement is substantially impermeable for aerosols and grease and that the housing (1) has at least one further opening which is gas-tightly closed by means of a second closure (5a, 5b) which opens in dependence on temperature, as long as the temperature does not exceed the response temperature of said second closure, wherein the response temperature of said second closure is higher than that of the first closures, and wherein the second opening is so arranged in the housing that the catalyst arrangement is directly exposed to the atmosphere surrounding the housing, after opening of the second closure, without the interposition of the filter arrangement.

2. Apparatus according to claim 1 characterised in that the housing is subdivided into at least one filter chamber (F) and a catalyst chamber (K), that in the region of the filter chamber it has at least one inlet opening (11) and in the region of the catalyst chamber it has at least one outlet opening (11) and a further opening respectively, and that the position and the area of the at least one inlet opening and the at least one outlet opening are so selected that after opening of the first closures (7) due to natural convection a flow occurs through the at least one inlet opening, the filter chamber (F) containing the filter arrangement, the catalyst chamber (K) and the at least one outlet opening.

3. Apparatus according to claim 2 characterised in that the housing (1 ) which is of a substantially parallelepipedic configuration has a respective filter chamber (F) at each of its two ends and the catalyst chamber (K) between the filter chambers.

4. Apparatus according to one of claims 2 and 3 characterised in that the housing is subdivided into the various chambers (F, K) by means of coarse meshes (6).

5. Apparatus according to one of claims 3 and 4 characterised in that in the region of the filter chamber or chambers (F) the housing (1) has at least one inlet opening in each of a first, a second and a third of the four side walls and in the (respective) end wall and in the region of the catalyst chamber (K) it has in the fourth side wall at least one outlet opening and the further opening in the side wall disposed in opposite relationship thereto.

6. Apparatus according to one of claims 2 to 5 characterised in that in the filter chamber (F) the inlet openings are covered with a relatively coarse filter (17) and the remainder of the filter chamber is filled with relatively fine corrugated filter foils (18).

7. Apparatus according to claim 6 characterised in that the relatively coarse filters (17) have a degree of separation of about 80% for aerosols and grease particles while the relatively fine filter foils (18) have a degree of separation of 90 to 99%.

8. Apparatus according to one of claims 6 and 7 characterised in that the fine filter foils (18) are provided with holes (19), wherein the holes of two adjacent filter foils are arranged in displaced relationship with each other.

9. Apparatus according to one of the preceding claims characterised in that the first closures each include a cover plate (7) which is laid from the outside over the associated opening (11), the cover plates being soldered to the housing (1) around the plates by means of a solder (13) which melts at the desired response temperature, wherein inserted between the cover plate (7) and the housing wall (3b) are stressed springs (10) which urge the cover plate away from the housing when the solder melts.

10. Apparatus according to one of the preceding claims characterised in that a further opening is provided in the bottom of the catalyst chamber (K).

11. Apparatus according to claim 10 characterised in that the second closure includes a plate which is laid onto the further opening from the outside and which is soldered therearound with a solder whose melting temperature determines the response temperature of the second closure, wherein inserted between the plate and the housing are stressed springs which urge the plate away from the housing when the solder melts.

12. Apparatus according to claim 10 characterised in that the second closure has at least one plate (5a, 5b) which is mounted pivotably to the housing and which is at least partially soldered to the housing (1) by means of a solder determining the response temperature of the second closure and can be pivoted open when the solder melts by interposed stressed springs.

13. Apparatus according to claim 12 characterised in that the side of the plate (5a, 5b) which is inward in the closed condition is coated with catalyst material.

14. Apparatus according to one of the preceding claims characterised in that the housing has a frame comprising shaped bars to which metal plates (2a, 2b, 2e, 4a, 4b, 4c, 3a, 3b) forming the housing walls are gas-tightly fixed, preferably soldered or welded.

15. Apparatus according to claim 14 characterised in that at least some of the metal plates forming the housing walls are coated at their inside with catalyst material.

16. Apparatus according to one of claims 10 to 15 characterised in that the catalyst arrangement includes one or more catalyst bodies which are fixed to the housing by means of flexible holding means in such a way that they drop out of the catalyst chamber after opening of the second closure by a distance which is predetermined by the length of the holding means.

17. Apparatus according to one of the preceding claims characterised in that the housing (1) is provided with means (20, 21) for producing and maintaining an inert gas atmosphere within the housing under a pressure which is higher than that of the atmosphere surrounding the housing.

## Revendications

1. Dispositif de recombinaison d'hydrogène et d'oxygène à l'aide d'un système de catalyseur, dans lequel le système de catalyseur est disposé dans une enceinte (1) qui comporte au moins un orifice d'entrée (11) et au moins un orifice de sortie (11) qui sont fermés de façon étanche aux gaz au moyen d'un premier groupe d'obturateurs (7) qui s'ouvrent en fonction de la température, jusqu'à ce que la température ne dépasse pas la température de réponse des obturateurs, et dans lequel, en outre, un système de filtres (17, 18) est disposé dans l'enceinte d'une manière telle qu'après l'ouverture des premiers obturateurs, des gaz ou des mélanges de gaz entrant dans l'orifice d'entrée n'atteignent le système de catalyseur qu'après avoir traversé le système de filtres,
caractérisé en ce que le système de filtres est essentiellement imperméable pour les aérosols et les graisses et que l'enceinte (1) comporte au moins une ouverture supplémentaire qui peut être fermée de façon étanche aux gaz au moyen d'un deuxième obturateur (5a, 5b) qui s'ouvre en fonction de la température, jusqu'à ce que la température ne dépasse pas la température de réponse de cet obturateur, la température de réponse de ce deuxième obturateur étant plus élevée que celle des premiers obturateurs, et la deuxième ouverture étant disposée dans l'enceinte d'une manière telle que le système de catalyseur est exposé directement à l'atmosphère entourant l'enceinte après l'ouverture du deuxième obturateur, sans l'intermédiaire du système de filtres.

2. Dispositif selon la revendication 1, caractérisé en ce que l'enceinte est divisée en au moins une chambre à filtres (F) et une chambre à catalyseur (K), qu'elle comporte au moins un orifice d'entrée (11) dans la zone de la chambre à filtres et au moins un orifice de sortie (11) dans la zone de la chambre à catalyseur, ainsi qu'une ouverture supplémentaire, et que la position et la superficie de l'orifice minimal d'entrée et de l'orifice minimal de sortie sont choisies d'une manière telle qu'après l'ouverture des premiers obturateurs (7), en raison d'une convection naturelle, un écoulement s'établit dans l'orifice minimal d'entrée, dans la chambre à filtres (F) contenant le système de filtres, dans la chambre à catalyseur (K) et dans l'orifice minimal de sortie.

3. Dispositif selon la revendication 2, caractérisé en ce que l'enceinte (1) de forme essentiellement parallélépipédique comporte sur chacun de ses deux côtés frontaux une chambre à filtre (F), et une chambre à catalyseur (K) entre ceux-ci.

4. Dispositif selon la revendication 2 ou 3, caractérisé en ce que l'enceinte est divisée en différentes chambres (F, K) au moyen de treillis (6) à grosses mailles.

5. Dispositif selon la revendication 3 ou 4, caractérisé en ce que l'enceinte (1) comporte, dans la zone de la chambre à filtres ou des chambres à filtres (F), au moins un orifice d'entrée dans une première, une deuxième et une troisième paroi, parmi les quatre parois latérales, ainsi que dans la paroi frontale (correspondante), et dans la zone de la chambre à catalyseur (K), au moins un orifice de sortie dans la quatrième paroi latérale, ainsi que l'ouverture supplémentaire dans la paroi latérale située en face.

6. Dispositif selon l'une des revendications 2 à 5, caractérisé en ce que, dans la chambre à filtres (F), les orifices d'entrée sont recouverts par un filtre relativement grossier, et le reste de la chambre à filtres est rempli de feuilles filtrantes (18) ondulées relativement fines.

7. Dispositif selon la revendication 6, caractérisé en ce que les filtres (17) relativement grossiers ont un taux de séparation d'environ 80 % pour des aérosols et des particules de graisse, tandis que les feuilles filtrantes (18) relatives fines ont un taux de séparation de 90 à 99 %.

8. Dispositif selon la revendication 6 ou 7, caractérisé en ce que les feuilles filtrantes (18) fines sont pourvues de trous (19), les trous de deux feuilles filtrantes voisines étant disposés de façon désaxée les uns par rapport aux autres.

9. Dispositif selon l'une des revendications précédentes, caractérisé en ce que les premiers obturateurs entourent chacun une plaque de recouvrement (7) placée par l'extérieur sur l'orifice (11) correspondant, ces plaques de recouvrement étant soudées sur leur pourtour avec l'enceinte (1) au moyen d'une soudure (13) qui fond à la température souhaitée de réponse, des ressorts contraints (10) étant insérés entre la plaque de recouvrement (7) et la paroi (3b) de l'enceinte, qui écartent la plaque de recouvrement de l'enceinte quand la soudure fond.

10. Dispositif selon l'une des revendications précédentes, caractérisé en qu'une ouverture supplémentaire est formée dans le fond de la chambre à catalyseur (K).

11. Dispositif selon la revendication 10, caractérisé en ce que le deuxième obturateur comprend une plaque posée sur l'ouverture supplémentaire et fixée sur son pourtour avec une soudure dont la température de fusion détermine la température de réponse du deuxième obturateur, des ressorts contraints étant insérés entre la plaque et l'enceinte, qui écartent la plaque de l'enceinte quand la soudure fond.

12. Dispositif selon la revendication 10, caractérisé en ce que le deuxième obturateur comporte au moins une plaque (5a, 5b) articulée de façon à pouvoir pivoter sur l'enceinte, qui est soudée au moins partiellement avec l'enceinte (1) au moyen d'une soudure définissant la température de réponse du deuxième obturateur, et qui peut être rabattue par des ressorts contraints intermédiaires quand la soudure fond.

13. Dispositif selon la revendication 12, caractérisé en ce que la face interne de la plaque (5a, 5b), à l'état fermé, est recouverte d'un matériau catalyseur.

14. Dispositif selon l'une des revendications précédentes, caractérisé en ce que l'enceinte comporte un cadre formé de rails profilés, sur lequel les tôles (2a, 2b, 2e, 4a, 4b, 4c, 3a, 3b) formant les parois de l'enceinte sont fixées, de préférence par brasage ou soudage.

15. Dispositif selon la revendication 14, caractérisé en ce qu'au moins quelques-unes des tôles formant les parois de l'enceinte sont recouvertes d'un matériau catalyseur sur leur face interne.

16. Dispositif selon l'une des revendications 10 à 15, caractérisé en ce que le système de catalyseur comprend un ou plusieurs éléments catalyseurs qui sont fixés sur l'enceinte par un moyen souple de fixation, d'une manière telle qu'après l'ouverture du deuxième obturateur, ils tombent de la chambre de catalyse sur une distance qui est prédéfinie par la longueur du moyen de fixation.

17. Dispositif selon l'une des revendications précédentes, caractérisé en que l'enceinte (1) est pourvue de moyens (20, 21) pour créer et maintenir une atmosphère de gaz inerte à l'intérieur de l'enceinte, à une pression qui est supérieure à celle de l'atmosphère qui entoure l'enceinte.
